**Europäisches Patentamt**

**European Patent Office**

**Office européen des brevets**

(19)

(11) Numéro de publication : **0 129 675**
**B1**

(12) # FASCICULE DE BREVET EUROPÉEN

(45) Date de publication du fascicule du brevet :
27.05.87

(51) Int. Cl.⁴ : **B 60 C 15/02**

(21) Numéro de dépôt : **84104818.4**

(22) Date de dépôt : **28.04.84**

(54) **Pneumatique à carcasse radiale utilisable notamment sans chambre à air indépendante.**

(30) Priorité : **23.06.83 FR 8310543**

(43) Date de publication de la demande :
**02.01.85 Bulletin 85/01**

(45) Mention de la délivrance du brevet :
**27.05.87 Bulletin 87/22**

(84) Etats contractants désignés :
**AT BE CH DE GB IT LI LU NL SE**

(56) Documents cités :
FR-A- 1 127 632
FR-A- 1 536 469
FR-A- 2 275 323
FR-A- 2 337 058
FR-A- 2 415 016
GB-A- 1 480 917
INTERNATIONAL POLYMER SCIENCE AND TECHNO-
LOGY, vol.3, no. 1, 1976, pages 73-74, Shrewsbury,
GB; V.N. LAPTEV et al.: "Design aspects of the bead
zone of radial-ply tractor tyres"

(73) Titulaire : **MICHELIN & CIE (Compagnie Générale des
Etablissements Michelin) Société dite:
4 rue du Terrail
F-63000 Clermont-Ferrand (FR)**

(72) Inventeur : **Pompier, Jean-Pierre
Enval
F-63530 Volvic (FR)**

(74) Mandataire : **Renaudie, Jacques et al
Michelin & Cie Service K. Brevets
F-63040 Clermont-Ferrand Cédex (FR)**

**0 129 675**

## Description

La présente invention concerne des pneumatiques pour véhicules légers, dépourvus de chambre à air indépendante, dotés d'une armature de carcasse radiale et d'une armature de sommet composée d'au moins deux nappes de câbles ou fils parallèles dans chaque nappe et croisés d'une nappe à la suivante. Plus particulièrement, l'invention concerne les bourrelets de tels pneumatiques, pourvus d'au moins un renforcement annulaire sensiblement inextensible permettant d'ancrer l'armature de carcasse par enroulement.

Pour des raisons de sécurité, les enveloppes de pneumatique considérées sont montées sur des jantes adaptées, dont la forme et les dimensions sont actuellement normalisées (normes de l'ETRTO par exemple).

Ces jantes ont la particularité d'être munies, au moins du côté extérieur du véhicule, entre la gorge circonférentielle dénommée base creuse, et le siège tronconique de bourrelet, d'une saillie circonférentielle présentant en coupe radiale un contour horizontal, d'où le nom de « bosse aplatie » ou « flat hump ». Cette saillie cylindrique a généralement un diamètre égal ou légèrement supérieur au diamètre nominal de la jante.

Les bourrelets de pneumatiques sans chambre, destinés à être montés sur ces jantes, ont une base, de largeur axiale légèrement inférieure à la distance axiale comprise entre la verticale interne du rebord de jante et le bord axialement externe de la saillie cylindrique.

Après moulage du pneumatique dans le moule de vulcanisation, cette base se présente essentiellement sous la forme d'une surface tronconique de manière à ce que le diamètre du bourrelet, mesuré à l'intersection de la génératrice de la surface tronconique et de la paroi verticale du bourrelet, soit légèrement inférieur au diamètre nominal de la jante, la différence de ces diamètres étant de l'ordre de 0,3 % du diamètre nominal de la jante.

Le renforcement annulaire, ou tringle, pouvant être, vu en section radiale, de forme et de dimensions diverses, est alors situé axialement et radialement à peu près au centre de la masse du matériau élastomère de remplissage du bourrelet.

Une telle construction permet un montage correct des bourrelets sur les sièges correspondants de la jante sous l'effet de la pression d'air introduite dans le pneumatique lors du gonflage, ainsi que l'étanchéité de la cavité intérieure du pneumatique. La pression élevée obtenue entre les deux surfaces, par déformation de compression du matériau élastomère assure une position ferme du bourrelet contre les sollicitations mécaniques normales auxquelles il est soumis, dans le cas d'une pression correcte de gonflage, c'est-à-dire une pression égale à ou très peu différente de la pression de gonflage recommandée par les normes connues et par les manufacturiers en fonction de la dimension utilisée et de la charge supportée par le pneumatique.

Avec l'amélioration permanente de la stabilité des véhicules et la possibilité de vitesses de plus en plus élevées dans les virages, il s'est avéré que les moyens connus sont parfois insuffisants pour maintenir en place les bourrelets de pneumatique sur leurs sièges de jante en toutes circonstances, et plus particulièrement dans le cas de pneumatiques ayant une armature de carcasse radiale et dépourvus de chambre à air.

Sous l'effet combiné des forces multiples existant entre la surface de contact du pneumatique et le sol, et des couples non moins multiples affectant la roue, des sollicitations importantes sont imposées aux bourrelets de pneumatique, et en particulier aux tringles de renforcement.

Dans le cas d'une perte de pression de gonflage importante et d'un roulage sur une trajectoire courbe de faible rayon, ces sollicitations provoquent malgré la saillie de la jante, le déplacement vers la partie creuse de cette même jante du bourrelet le plus éloigné du centre de la trajectoire.

Ce phénomène devient particulièrement grave dans le cas des véhicules dits « à traction avant » : la maîtrise de la direction est perdue, d'où les accidents survenant lors de roulages à forte vitesse sur des trajectoires courbes à faible rayon (virages serrés, dépassements rapides).

Dans le cas d'un roulage à pression normale ou sous-gonflé, ces sollicitations sont directement responsables de la perte par fatigue des propriétés initiales des vulcanisats au voisinage de la tringle, et notamment des vulcanisats disposés radialement entre la base du bourrelet et une ligne parallèle à cette base passant par le point extérieur du contour de la tringle le plus proche de l'axe de rotation du pneumatique. Il en résulte que ces vulcanisats, après un certain nombre de rotations effectuées par le pneumatique, ne sont plus aptes à remplir leurs fonctions initiales, et qu'il n'est plus nécessaire de subir des sollicitations importantes pour conduire à des pertes d'étanchéité, et des déplacements de bourrelets vers la base creuse de la jante.

En vue de prévenir de tels incidents, ou accidents lors d'un roulage, sous des conditions extrêmes (perte soudaine de pression) de nombreuses solutions ont été proposées.

Elles concernent, en très grande majorité, des ensembles pneumatique-jante, avec modifications simultanées du pneumatique et de la jante.

Ces dispositifs ont l'inconvénient majeur de ne pouvoir dissocier dans leur utilisation pneumatique et jante et de ne pouvoir utiliser les jantes pleines classiques avec saillie.

D'autres solutions visant le même objectif et sans modification des jantes classiques normalisées

**0 129 675**

sont connues. Le brevet français N° 1 536 469 (correspondant au préambule de la revendication 1) confère par exemple aux bourrelets du pneumatique une meilleure assise sur les sièges de jante, en donnant à la surface radialement interne du bourrelet un angle par rapport à l'axe de rotation du pneumatique supérieur à l'angle de la surface tronconique correspondante de la jante de montage. Grâce à la combinaison de ce moyen et d'une diminution du diamètre du bourrelet par rapport au diamètre nominal de la jante, la pression de gonflage au-dessous de laquelle le pneumatique quitte sa position sur le siège de jante est sensiblement abaissée.

Sous des conditions sévères de roulage, une telle disposition, pour être satisfaisante, demande un serrage trop important, devenant incompatible avec la mise en place correcte des bourrelets du pneumatique sur la jante.

Le brevet français N° 2 429 111 montre un pneumatique monté sur une jante du type à saillie, dont les bourrelets sont pourvus d'un renforcement annulaire en élastomère, radialement intérieur à la base du bourrelet du pneumatique. Une plus ample chute de pression est ainsi évitée lors des mouvements du bourrelet du pneumatique, prévenant ainsi le déplacement axial impromptu du bourrelet sur sa jante.

En plus des difficultés certaines de montage d'un tel pneumatique, et dans le cas d'une chute de pression se produisant pour d'autres causes, la solution proposée est incompatible avec le maintien du bourrelet sur la jante.

Le problème à la base de l'invention est de remédier à ces inconvénients, en assurant de manière permanente une mise en place facile et précise des bourrelets sur les sièges de jante sous l'effet de la pression de gonflage, l'étanchéité de la cavité intérieure du pneumatique et en assurant le maintien des bourrelets sur les sièges de jante jusqu'à une pression de gonflage nettement inférieure à celle au-dessous de laquelle se déplace habituellement un bourrelet classique. Ce problème est résolu par les caractéristiques de la revendication 1.

A cet effet, le pneumatique conforme à l'invention est remarquable en ce qu'il est doté, de part et d'autre de son plan équatorial, d'un bourrelet présentant en combinaison les caractéristiques suivantes :

a) vue en section radiale en partant du plan équatorial vers l'extérieur du pneumatique, la base est composée essentiellement :

— d'une zone tronconique dont la génératrice fait avec l'axe de rotation du pneumatique un angle s'ouvrant vers l'extérieur, tel que sa tangente soit comprise entre 0,5 et 0,6, la largeur axiale de cette génératrice étant comprise entre 45 et 65 % de la largeur totale du bourrelet

— située après cette zone tronconique, d'une zone cylindrique, dont le rayon par rapport à l'axe de rotation du pneumatique est égal au rayon de la saillie cylindrique ou flat hump de la jante, et de largeur axiale au moins égale à 15 % de la largeur totale du bourrelet et de préférence comprise entre 15 et 25 % de cette largeur,

— et d'une zone de raccordement entre la zone cylindrique et la paroi verticale du bourrelet,

b) la tringle annulaire de renforcement possède, suivant une section du pneumatique par un plan radial passant par l'axe de rotation

— d'une part un diamètre intérieur, perpendiculaire à l'axe de rotation du pneumatique, au moins égal au diamètre de la saillie cylindrique et au plus égal à 1,004 fois ce diamètre,

— d'autre part, une section droite de forme quelconque dont le cercle circonscrit a son centre situé, axialement par rapport à la paroi verticale du bourrelet, à une distance telle que le rapport $s = (D_J - D_B)/(D_T - D_B)$ soit au moins égal à 0,45,

$D_J$ étant le diamètre de la jante mesuré suivant un plan parallèle au plan équatorial du pneumatique et passant par ledit centre,

$D_B$ étant le diamètre de la base de bourrelet suivant le même plan,

$D_T$ étant le diamètre intérieur de la tringle suivant le même plan.

De manière préférentielle et selon l'invention, la tringle est telle que son cercle circonscrit ait un rayon au plus égal à 0,72 fois le rayon de l'arc de cercle raccordant la génératrice de la zone tronconique de la jante à la génératrice de la section cylindrique ou flat hump.

Il est en outre préférable que la section droite de la tringle soit circulaire, ce qui, pour le rayon maximal préférentiel, permet la masse de matériau, acier de préférence, la plus importante.

Toujours selon l'invention et de manière avantageuse, on peut adjoindre, tangente à cette tringle principale circulaire, une deuxième tringle de section droite circulaire, radialement et axialement extérieure.

Le centre et le diamètre de sa section circulaire sont choisis de manière à ce que la projection du centre sur la base du bourrelet soit située sur la génératrice de la zone cylindrique de cette base.

Cette deuxième tringle permet un centrage plus précis de la tringle principale lors de la vulcanisation du pneumatique, et ne nuit en rien à la mise en place du pneumatique sur sa jante.

Préférentiellement, la rigidité de la pointe du bourrelet, pointe radialement et axialement intérieure à la tringle principale, est accrue par l'emploi d'un vulcanisat à haut module d'élasticité.

Une couche de renforcement peut s'étendre en totalité ou en partie le long du contour de la pointe du bourrelet, et peut être constituée, comme connu en soi, d'une ou plusieurs nappes de fils, textiles par exemple.

La zone de raccordement entre la zone cylindrique de la base du bourrelet et la paroi verticale de celui-ci peut être circulaire, mais peut, de façon préférentielle, se présenter sous forme tronconique, la

3

0 129 675

génératrice de cette surface faisant alors avec l'axe de rotation un angle s'ouvrant vers l'extérieur compris entre 45° et 70°, et de préférence un angle très voisin de l'angle que fait avec l'axe de rotation la paroi axialement interne, raccordant les parties plates de la saillie et de la base creuse.

Des exemples de réalisation selon l'invention sont décrits ci-après en référence au dessin ci-joint dans lequel :

— la figure 1 est une vue en section par un plan radial passant par l'axe de rotation du pneumatique, d'un bourrelet de ce pneumatique non monté, et non gonflé, représentant à grande échelle le contour extérieur de ce bourrelet, par rapport au contour de la base d'une jante 390 × 150 TR FH normalisée, et représentant l'emplacement de la tringle principale par rapport à ces deux contours.

— la figure 2 est une vue en section radiale d'une solution préférentielle à deux tringles de section circulaire,

— la figure 3 représente une solution préférentielle où la zone de raccordement entre la paroi verticale du bourrelet et la zone cylindrique, est une zone tronconique.

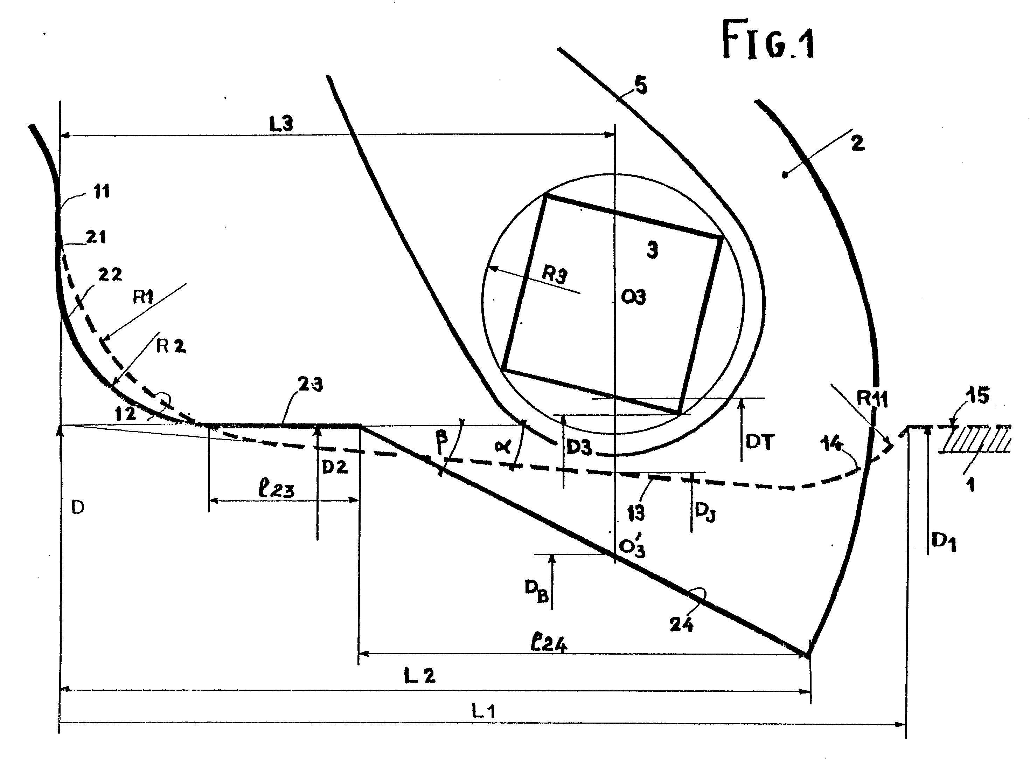

Sur la figure 1, il est montré en traits interrompus le contour d'une jante normalisée 1 (390 × 140 TR FH) utilisée dans le cadre de l'invention, avec la paroi interne de son rebord vertical 11, un arc de cercle 12 de rayon $R_1$ de 6 mm maximum, raccordant cette paroi 11 à la génératrice 13 du siège tronconique. La génératrice 13 fait avec une droite parallèle à l'axe de rotation du pneumatique un angle $\alpha$ théorique de 5°, et se trouve reliée à la génératrice 15 de la saillie cylindrique de la jante par un arc de cercle 14 de rayon $R_{11}$ ayant une valeur de 3,5 mm. La distance axiale $L_1$ entre la paroi verticale du rebord et le point de départ de la zone cylindrique est de 203 mm. Quant au diamètre $D_1$ de la saillie cylindrique, il est égal au diamètre nominal D de la jante, mesuré à l'intersection de la génératrice 13 et de la paroi 11.

Comparativement à ce contour de jante, et selon l'invention, le bourrelet 2 présente une base dont le contour figuré en traits continus est constitué d'une paroi verticale 21, d'un arc de cercle 22, et de deux génératrices 23 et 24.

La paroi verticale 21 est à la même distance axiale du plan équatorial du pneumatique que la paroi interne 11 du rebord de jante. La génératrice 23 de la zone cylindrique est reliée à la paroi 21 par un arc de cercle 22 de rayon $R_2$. Cette génératrice 23 a une largeur axiale $l_{23}$ de 36 mm, égale à 20 % de la largeur totale du bourrelet $L_2$, qui est de 180 mm. Le diamètre $D_2$ de cette zone cylindrique est égal au diamètre $D_1$ de la saillie cylindrique ou flat hump de la jante. Prolongeant la génératrice 23, la génératrice 24 de la zone tronconique du bourrelet fait avec l'axe de rotation du pneumatique un angle $\theta$ de 27°, et a une largeur axiale $l_{24}$ de 108 mm égale à 0,60 fois la largeur $L_2$.

Le bourrelet 2 du pneumatique possède dans cet exemple une tringle 3 de section carrée autour de laquelle vient s'enrouler l'armature de nappe carcasse, représentée par sa ligne moyenne 5.

Le cercle circonscrit à la section polygonale de la tringle a selon l'invention, un rayon $R_3$ de 3,125 mm, et un centre $O_3$ dont la projection $O'_3$ sur la base du bourrelet est située sur la génératrice 24 de la zone tronconique à une distance axiale $L_3$ de 133 mm de la paroi verticale 21.

Le diamètre intérieur $D_3$ de la tringle, mesuré entre les deux points de cette tringle les plus proches radialement de l'axe de rotation est de 391 mm ; égal à 1,0026 fois le diamètre $D_1$ de la saillie cylindrique de la jante.

Si on appelle serrage sur jante le rapport s tel que défini précédemment :

$$s = (D_J - D_B)/(D_T - D_B)$$

la mesure sur épure donne s égal à 0,53. Cette valeur, qui mesure en première approximation la déformation par compression imposée à la matière élastomère située sous tringle, est importante comparativement au serrage normalement employé dans un pneumatique courant, qui ne dépasse généralement pas 0,30. Une valeur supérieure rend en effet le montage d'un bourrelet courant pratiquement impossible.

Les essais réalisés par la demanderesse ont permis de constater que, lors de la mise en pression du pneumatique, du fait de la présence de deux surfaces cylindriques concentriques et de diamètre égal, le guidage du bourrelet sur la jante est précis, et en conséquence, la compression de la masse élastomérique sous tringle étant circonférentiellement uniforme, la mise en place du bourrelet sur son siège s'avère très aisée malgré le serrage important. La position de la tringle franchement éloignée de la paroi verticale du bourrelet de la jante, du fait du serrage important obtenu et du blocage de la tringle par la paroi circulaire de la saillie confère au bourrelet une stabilité améliorée.

C'est ainsi que le pneu 180-65 390 décrit ci-dessus, sous une charge de 350 kg, présente une pression au-dessous de laquelle le bourrelet se déplace axialement vers le fond de jante égale à 0,6 bar, alors que cette pression pour le pneu témoin était de 1 bar. L'essai consiste à lancer un véhicule à une vitesse de 50 km/h sur une piste ayant un tracé en forme de clothoïde, dont le rayon de courbure de la trajectoire moyenne varie progressivement de l'infini à 20 m. En fin de trajectoire, le chauffeur soumet le véhicule à des accélérations ou freinages pour confirmer la valeur obtenue.

En outre, les mouvements de gomme étant réduits sous tringle, quelles que soient les sollicitations auxquelles est soumis le bourrelet, axiales, circonférentielles ou radiales, il en résulte dans le cas de roulages à pression normale ou supérieure à 0,6 bar une meilleure tenue à la fatigue des vulcanisats voisins de la tringle de renforcement, et en particulier de la pointe de gomme. Ceci permet au bourrelet

4

selon l'invention, de conserver en majeure partie ses propriétés initiales et de présenter ainsi les mêmes avantages pendant la durée de vie du pneumatique.

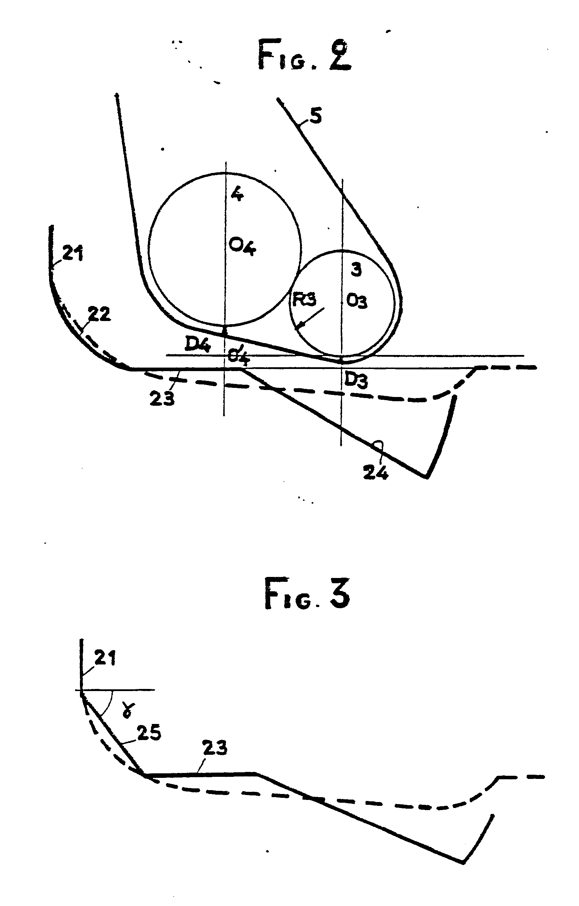

La figure 2 représente un bourrelet selon l'invention, avec une tringle principale 3 et une tringle complémentaire 4. Les deux tringles ont une section circulaire. La tringle 4, tangente à la tringle principale 3 a son centre $O_4$ tel que sa projection $O'_4$ sur la base du bourrelet soit située sur la génératrice de la zone cylindrique 23. Comme on peut le constater, le serrage de cette tringle est alors nul. Destinée à assurer un meilleur positionnement de la tringle principale 3 lors de la vulcanisation du pneumatique, elle permet cependant d'abaisser à 0,4 bar la pression au-dessous de laquelle le bourrelet se déplace de son siège de jante.

La figure 3 montre une zone de raccordement entre la paroi verticale 21 et la génératrice 23 sous forme tronconique. La génératrice 25 fait un angle de 55° avec l'axe de rotation du pneumatique, cet angle étant voisin de l'angle que fait la paroi axialement intérieure de la saillie cylindrique, paroi reliant la génératrice 15 au fond de jante (non représenté). Ce moyen préférentiel permet lors du montage du pneumatique sur sa jante, un meilleur guidage du bourrelet.

## Revendications

1. Pneumatique dépourvu de chambre à air indépendante, doté d'une armature de carcasse radiale (5), d'une armature de sommet composée d'au moins deux nappes de câbles parallèles dans chaque nappe, et croisés d'une nappe à la suivante, et de deux bourrelets (2) renforcés respectivement par au moins une tringle (3) autour de laquelle vient s'ancrer l'armature de carcasse, pouvant être monté sur une jante (1) normalisée ayant entre la base creuse et le siège tronconique, une saillie circonférentielle (15), la base des bourrelets, de largeur axiale $L_2$, présentant, vu en section radiale, un profil comprenant un arc de cercle (22) et une zone tronconique (24) de largeur axiale $l_{24}$ comprise entre 0,45 $L_2$ et 0,65 $L_2$, dont la génératrice fait avec l'axe de rotation du pneumatique un angle $\beta$ ; la tringle de renforcement (3) du bourrelet (2), vue en section radiale, ayant un diamètre intérieur $D_3$ au moins égal au diamètre de la saillie cylindrique de la jante (1), caractérisé en ce que la saillie circonférentielle (15) présente radialement une génératrice cylindrique, que le profil de la base des bourrelets (2) comprend en plus une zone cylindrique (23), de largeur axiale $l_{23}$ comprise entre 0,15 $L_2$ et 0,25 $L_2$, et de diamètre $D_2$ égal au diamètre $D_1$ de la saillie cylindrique (15) de la jante (1), que la tangente de cet angle $\beta$ soit comprise entre 0,5 et 0,6, que le diamètre intérieur $D_3$ de la tringle (3) est au plus égal à 1,004 fois ce diamètre $D_1$ et que la tringle (3) a une section droite dont le cercle circonscrit a son centre $O_3$ situé axialement par rapport à la paroi verticale (21) du bourrelet à une distance $L_3$ telle que le rapport

$$s = (D_J - D_B)/(D_T - D_B) \text{ soit } \geqslant 0,45 ;$$

$D_J$, $D_B$, $D_T$ étant respectivement les diamètres de la jante ($D_J$), de la base du bourrelet ($D_B$), de la tringle ($D_T$) mesurés dans un plan parallèle au plan équatorial du pneumatique et passant par ledit centre $O_3$.

2. Pneumatique selon la revendication 1, caractérisé en ce que le cercle circonscrit à la tringle (3) de renforcement a un rayon $R_3$ au plus égal à 0,72 fois le rayon $R_{11}$ de l'arc de cercle (14) joignant la génératrice du siège tronconique à la génératrice de la saillie cylindrique (15) de la jante (1).

3. Pneumatique selon les revendications 1 ou 2 caractérisé en ce que la tringle (3) de renforcement a une section droite circulaire.

4. Pneumatique selon la revendication 3 caractérisé en ce que le bourrelet (2) comprend une deuxième tringle (4) de section droite circulaire, tangente à la tringle principale (3), dont le diamètre intérieur $D_4$ est supérieur au diamètre $D_3$ de la tringle principale (3) et dont le centre $O_4$ de sa section a une projection $O'_4$ sur la base du bourrelet située sur la génératrice cylindrique (23).

5. Pneumatique selon l'une des revendications 1 à 4 caractérisé en ce que l'arc de cercle (22) du profil de la base des bourrelets (2) est remplacé par la génératrice (25) d'une deuxième zone tronconique, cette génératrice faisant avec l'axe de rotation du pneumatique un angle $\gamma$ compris entre 45° et 75°, et de préférence égal à 60° ± 5°.

## Claims

1. A tire without an independent inner tube, having a radial carcass reinforcement (5), a crown reinforcement formed of at least two plies of cables which are parallel in each ply and crossed from one ply to the next, and two beads (2) each reinforced by at least one bead ring (3) around which the carcass reinforcement is anchored, which can be mounted on a standard rim (1) provided, between the well base and the frustoconical bead seat, with a circumferential hump (15), the base of beads, of an axial width $L_2$, having, seen in radial section a profile comprising a circular arc (22) and a frustoconical zone (24) having an axial width $l_{24}$ of between 0.45 $L_2$ and 0.65 $L_2$, the generatrix of which forms with the axis of rotation of the tire an angle $\beta$ ; the reinforcing bead ring (3) of the bead (2), seen in radial section, having an interior diameter $D_3$ at least equal to the diameter $D_1$ of the hump of the rim (1), characterized by the fact that the

0 129 675

circumferential hump (15) has radially a cylindrical generatrix, that the profile of the base of beads (2) comprises in addition a cylindrical zone (23) having an axial width $l_{23}$ between 0,15 $L_2$ and 0,25 $L_2$ and having a diameter $D_2$ equal to the diameter $D_1$ of the cylindrical hump (15) of the rim (1), that the value of the tangent of the angle $\beta$ is between 0,5 and 0,6, that the interior diameter $D_3$ of the bead ring (3) is at most equal to 1,004 times the diameter $D_1$ and that the bead ring (3) has a cross section, the circumscribed circle of which has its center ($O_3$) located, axially with respect ot the vertical wall (21) to the bead, at a distance away $L_3$ such that the ratio

$$s = (D_J - D_B)/(D_T - D_B) \text{ is } \geqslant 0,45,$$

$D_J$, $D_B$, $D_T$ being the diameter of the rim ($D_J$), the diameter of the base of the bead ($D_B$) and the diameter of the bead ring ($D_T$), respectively, measured in a plane parallel to the equatorial plane of the tire and passing through said center $O_3$.

2. A tire according to claim 1, characterized by the fact that the circle circumscribed around the reinforcing bead ring (3) has a radius $R_3$ at most equal to 0.72 times the radius $R_{11}$ of the circular arc (14) connecting the generatrix of the frustoconical bead seat of the rim with the generatrix of the cylindrical hump (15) of the rim (1).

3. A tire according to claims 1 or 2, characterized by the fact that the reinforcing bead ring (3) has a circular cross section.

4. A tire according to claim 3, characterized by the fact that the bead (2) comprises a second bead ring (4) of circular cross section which is tangent to the principal bead ring (3) and the interior diameter $D_4$ of which is greater than the interior diameter $D_3$ of the principal bead ring (3) and the center ($O_4$) of the cross section of which has a projection $O'_4$ on the base of the bead which is located on the generatrix of the cylindrical zone (23).

5. A tire according to any one of claims 1 to 4, characterized by the fact that the circular arc (22) of the profile of the bead base (2) is replaced by the generatrix (25) of a second frustoconical zone, said generatrix forming with the axis of rotation of the tire an angle $\gamma$ of between 45° an 75°, and preferally equal to 60° $\pm$ 5°.

**Patentansprüche**

1. Schlauchloser Luftreifen, mit einer radialen Karkassenbewehrung (5), einer Scheitelbewehrung die aus zumindest zwei Lagen von in jeder Lage parallelen, von Lage zu Lage gekreuzten Kabeln besteht und mit zwei Wülsten (2) die durch jeweils zumindest einer Wulstkern (3) verstärkt sind und an welchem die Karkassenbewehrung verankert ist, montiert auf einer genormten Felge (1) die, zwischen der Hohlbasis und dem schrägen Sitz, einen Umfangsvorsprung (15) aufweist ; wobei die Basis der Wülste von einer axialen Länge $L_2$ in Radialschnitt ein Profil mit einem Kreisabschnitt (22) und einer Kegelstumpfzone (24) dessen axialen Länge $l_{24}$ zwischen 0,45 $\cdot L_2$ und 0,65 $\cdot L_2$ liegt und, dessen Mantellinie mit der Drehachse des Luftreifens einen Winkel $\beta$ bildet, aufweist ; wobei der Wulstkern (3) des Wulstes (2), im Radialschnitt gesehen, einen inneren Durchmesser $D_3$ aufweist, der zumindest gleich gross ist wie der Durchmesser des Vorsprunges der Felge (1), dadurch gekennzeichnet, dass der Umfangsvorsprung (15) in radialer Richtung zylindrische Mantellinie aufweist, dass das Profil der Basis der Wulste (2) zusätzlich eine zylindrische Zone (23) der axialen Länge $l_{23}$, die zwischen 0,15 $\cdot L_2$ und 0,25 $\cdot L_2$ liegt, aufweist, und dass der Durchmesser $D_2$ gleich ist dem Durchmesser $D_1$ des zylindrischen Vorsprunges (15) der Felge (1), dass der Tangens des Winkels $\beta$ zwischen 0,5 und 0,6 liegt und dass der innere Durchmesser $D_3$ der Wulstverstärkung (3) höchstens gleich ist dem 1,004-fachen des Durchmessers $D_1$ und das die Wulstverstärkung (3) einen Querschnitt aufweist, dessen Umkreismittelpunkt $O_3$ in axialer Richtung, bezüglich der Vertikalwand (21) des Wulstes einen Abstand $L_3$ aufweist, sodass das Verhältnis

$$S = (D_J - D_B) / (D_T - D_B) \geqslant 0,45 \text{ ist ;}$$

wobei $D_J$, $D_B$, $D_T$, Durchmesser der Felge ($D_J$), der Wulstbasis ($D_B$) und der Wulstverstärkung ($D_T$), gemessen in einer Ebene parallel zur Aquatorialebene des Luftreifens durch des Mittelpunkt $O_3$ sind.

2. Luftreifen nach Anspruch 1, dadurch gekennzeichnet, dass der Umkreis de Wulstverstäkung (3) einen Durchmesser $R_3$ aufweist, der maximal gleich ist dem 0,72-fachen des Radius $R_{11}$ des Kreisbogens (14), der die Mantellinie des schrägen Sitzes mit der Mantellinie der zylindrischen Vorprunges (15) der Felge (1) verbindet.

3. Luftreifen nach Anspruch 1 oder 2, dadurch gekennzeichnet, dass der Wulstkern (3) einen Kreisquerschnitt aufweist.

4. Luftreifen nach Anspruch 3, dadurch gekennzeichnet, dass der Wulst (2) einen zweiten Wulstkern (4) mit Kreisquerschnitt aufweist, der den Hauptulstkern (3) tangiert, wobei der Innendurchmesser $D_4$ grösser ist als der Durchmesser $D_3$ des Hauptwulstkernes (3) und wobei der Mittelpunkt $O_4$ seines Querschnittes eine Projektion $O'_4$ auf den Wulstgrund aufweist, die auf der zylindrischen Mantellinie (23)

6

liegt.

5. Luftreifen nach einem der Ansprüche 1 bis 4, dadurch gekennzeichnet, dass der Kreisbogen (22) des Profiles des Wulstgrundes (2) durch die Mantellinie (25) einer zweiten schrägen Fläche ersetzt ist, wobei diese Mantellinie mit der Drehachse des Luftreifens einen Winkel $\gamma$ der zwischen 45 und 75° liegt und der vorzugsweise gleich 60° ± 5° ist.

FIG.1

0 129 675

# FIG. 2

# FIG. 3

2